# EUROPEAN PATENT APPLICATION

(11) **EP 1 994 946 A1**
(43) Date of publication of application: **26.11.2008**
(21) Application number: 08156273.8
(22) Date of filing: 15.05.2008
(51) Int. Cl.: A61K 47/48, C08B 11/12, C08B 31/10, C08B 37/00, C08B 37/08, A61L 27/20

(54) **Polysaccharides cross-linked by ether bonds, their preparation and biomedical applications**

(30) Priority: 16.05.2007 EP 07425286
(71) Applicant: Biosuma S.r.l., 53100 Siena (IT)
(72) Inventor: Barbucci, Rolando, 53100, SIENA (IT)
(74) Representative: Minoja, Fabrizio

(57) **Abstract**

Disclosed are hydrogels based on polysaccharides containing a hydroxymethyl group at C-6 of the monosaccharide unit cross-linked by ether bonds formation, using as cross-linker agents diepoxyalkanes with linear or branched alkyl chains of various lengths, optionally substituted, like 1-2,3-4 diepoxybutane (DEB) or 1,2,7,8-diepoxyoctane (DEO) or linear or branched diepoxy polyether, like polyethylene glycol diglycidyl ether (PEGDGE).

## Description

The present invention relates to hydrogels based on polysaccharides cross-linked by ether bonds, their preparation and biomedical uses.

### Background of the invention

Natural and semi-synthetic polymers are widely used in various fields in view of their chemico-physical, technological and biological properties, and the low cost of the raw materials.

The poly-saccharides according to the invention are polysaccharide bearing a hydroxymethyl function at the C-6 of the monosaccharide ring, such as guar gum, cellulose, chitin and chitosan.

The fields in which these compounds are mainly employed are the food industry, in which they are used as thickeners, viscosity-controlling agents, buffers, etc., and the pharmaceutical industry, in which they are used to coat tablets and capsules and as topical gels with controlled release of the active constituents. Their use in the pharmaceutical and biomedical fields is particularly interesting because these polymers are non-toxic, biocompatible, and in some cases biodegradable.

In the pharmaceutical industry, their properties are of fundamental importance for the controlled release of drugs. Particularly, the guar gum is used as vehicle for oral controlled release and for gastrointestinal tract, specifically as a carrier for colon targeted drugs in the treatment of colorectal cancer. The GG polymer is also used in transdermal drug delivery system and as a supplementing agent to increase the viscosity of osteoarthritis treatment. The main limitation for using GG polymer based matrices in controlled drug delivery systems is its high hydrophilic characteristic which leads to a premature release of the loaded drug for some applications. It has been shown that the incorporation or the cross-linking with hydrophobic polymers would reduce the hydrophylic character and prevent a fast drug release. Another way to slow down the drug release would be to create a 3D network with mouldable mechanical properties and mechanical stability. At present, the chemical cross-linking of GG was carried out with glutaraldehyde or with phosphating agents.

Chitin and chitosan are generally insoluble in water and organic solvent because of their strong intermolecular hydrogen bonds. However, they can be converted to water soluble derivatives by chemically modifying OH or NH₂ groups in their molecules. Said derivatives, optionally in form of aggregates, can find application as drug delivery carriers.

Particularly, chitin and chitosan were used as "polymeric drugs", where low molecular weight drugs were conjugated by biodegradable linkage to the macromolecular carrier. Moreover, the cell gene delivery using quaternary chitosan conjugates was studied; chitosan gel microspheres were prepared via crosslinking with glutaraldehyde.

It was also reported the preparation of PEG-grafted chitosan nano-aggregate as polypeptide drug vehicles, where nanoparticles of PEG-grafted chitosan are aggregated by hydrogen bonds.

The grafting of PEG onto chitosan is an interesting approach for the preparation of a water soluble chitosan derivative, but the aggregates obtained have the inconveniences typical of physical hydrogel: sensitivity to pH, temperature, ionic strength, parameters that can not easily maintained under control during the in-vivo applications.

The creation of 3D scaffolds obtained by the chemical cross-linking of these polymers also allows the preparation of a matrix for controlled release of drugs with well defined and stable chemico-physical and mechanical properties.

Moreover, non-ionic polymer, such as guar gum, cellulose, chitin and chitosan may be advantageously used for the controlled release of charged drugs under an electric field, without possible interferences, since the hydrogel behaves as a completely inert matrix.

### Description of the invention

The invention relates to hydrogels obtainable by cross-linking of polysaccharide selected from guar gum, cellulose, chitosan and chitin. These polysaccharides have a primary hydroxyl group at the C-6 of the monosaccharide unit which is used as cross-linking site by means of an ether bond.

The reaction can be conducted in an aqueous solution, at acid or basic pH, at a temperature between 20°C and 70°C, and using as cross-linker a diepoxyalkane having a linear or branched alkyl chain of various length, optionally substituted, such as 1-2,3-4 diepoxybutane (DEB) or 1,2,7,8-diepoxyoctane (DEO), or a linear or branched diepoxy polyether, such as polyethylene glycol diglycidyl ether (PEGDGE).

Particularly, the PEGDGE is an interesting cross-linking agent thanks to its low cost and high biocompatibility. Moreover this choice allows the cross-linking reaction to be carried out in water for a short time if compared with the reaction performed using glutaraldehyde as cross-linking agent.

The crosslinking is evaluated by IR spectroscopy, and the degree of crosslinking by NMR.

The hydrogel IR spectra are very similar to the polysaccharides before cross-linking, because no new additional functional groups are introduced. The only difference is a peak at around 1100-1150 cm⁻¹, corresponding to the stretching of asymmetric ether bonds and that usually increases its intensity after the cross-linker introduction.

Mechanical investigation has shown that these materials are particularly recommended for applications where a good mechanical stability and an easy injectability are required at the same time.

Rheological analyses demonstrated that the GG hydrogel has thixotropic properties giving to the material a consistency that makes it suitable to dissipate the loads to which it is subjected.

These data suggest the use of the GG hydrogel in biomedical applications, in particular for the drug controlled release and as filler material where high loads are involved, for example as nucleus pulposus replacement for damaged intervertebral discs. Indeed, a thixotropic nature is mandatory for the injection of the material into the host tissue or inside the annulus fibrosus (in the case of nucleus pulposus replacement).

The hydrogels obtained by crosslinking with the above-mentioned diepoxy agents have chemico-physical and mechanical properties, enabling their use in various sectors. Moreover, their use is advantageous in view of the low manufacturing costs and simple synthesis processes. The use of these procedures offers considerable advantages because it reduces manufacturing times, does not require the use of organic solvents, does not cause the formation of toxic by-products, and provides high yields.

The invention is illustrated in greater detail in the examples below.

### EXAMPLES

### Example 1

Guar gum crosslinked with polyethylene glycol diglycidyl ether (PEGDGE)

Guar gum was slowly dissolved (1.5% w/v) in an aqueous solution of NaOH 0.1M, under magnetic stirring. The solution was heated at 41.5°C and the PEGDGE (molar ratio GG/PEGDGE = 1/2.7) was slowly added to the solution and the mixture was reacted for 14h. The GG hydrogel obtained was washed with a solution of acetic acid (96%) till pH 7. Then the hydrogel was washed with water and freeze-dried.

### Example 2

Chitosan crosslinked with polyethylene glycol diglycidyl ether (PEGDGE)

The chitosan polymer was slowly dissolved (0,25%) in a water solution of acetic acid (1%), under stirring, then an aqueous solution of NaOH 5% was added until polymer precipitation. The precipitated chitosan was recovered by centrifugation and again dissolved (1.2% w/v) in an aqueous solution of HCl 0.5M, under magnetic stirring. The solution was heated at 41.5°C and the PEGDGE (10 eq) was slowly added, the mixture was left to react for 14h. The chitosan hydrogel obtained was washed with water and then freeze-dried.

### Example 3

Guar Gum crosslinked with 1,2,7,8-diepoxyoctane (DEO)

Guar gum was slowly dissolved in an 0.1M NaOH aqueous solution (1.5% w/v), under magnetic stirring. The solution was heated till 40°C and the required amount of DEO (CMC/DEO ratio of 1:4) was added. The mixture was reacted for 14h. GG hydrogel obtained was washed with a solution of acetic acid (96%) till pH 7. Then the hydrogel was washed with water and freeze-dried.

## Claims

1. Hydrogels obtainable by cross-linking a polysaccharide containing a hydroxymethyl group on C-6 of the monosaccharide unit, by ether bond formation.

2. Hydrogels as claimed in claim 1, wherein the polysaccharides are selected from cellulose, guar gum, chitin and chitosan.

3. Hydrogels as claimed in claim 1 or 2, obtainable by reacting the polysaccharide with a linear or branched diepoxyalkane, optionally substituted or with a diepoxy polyether.

4. Hydrogels as claimed in claim 3 wherein the cross-linker is selected from 1-2,3-4 diepoxybutane (DEB) or 1,2,7,8-diepoxyoctane (DEO).

5. Hydrogels as claimed in claim 3, wherein the diepoxy polyether is polyethylene glycol diglycidyl ether (PEGDGE).

6. Use of the hydrogels as claimed in claims 1-5 as a carrier for drug controlled release.

7. Use of the hydrogels as claimed in claims 1-6 as a material for the nucleus pulposus replacement.
